# EUROPEAN PATENT SPECIFICATION

(11) **EP 0 537 266 B1**
(45) Date of publication and mention of the grant of the patent: **28.09.1994**
(21) Application number: 91913137.5
(22) Date of filing: 26.06.1991
(51) Int. Cl.: H01M 6/14, H01M 10/36

(54) **A SECONDARY OR PRIMARY LITHIUM BATTERY**
SEKUNDÄRE ODER PRIMÄRE LITHIUMBATTERIE
PILE AU LITHIUM PRIMAIRE OU SECONDAIRE

(30) Priority: 02.07.1990 SE 9000474
(43) Date of publication of application: 21.04.1993
(73) Proprietor: INCLUSION AB, S-213 75 Malmö (SE)
(72) Inventor: ROTHMAN, Ulf, S-230 10 Skanör (SE); MALLING, Jesper, DK-5230 Odense M (DK)
(74) Representative: Petri, Stellan
(86) International application number: SE9100467
(87) International publication number: WO9200613

(56) References cited:
- GB-A- 1 484 650
- GB-A- 2 142 469
- US-A- 4 002 492
- US-A- 4 416 960
- US-A- 4 752 541
- J. Electrochem. Soc.: ELECTROCHEMICAL SCIENCE AND TECHNOLOGY, Vol. 135, 1988, D.L. Forster et al: "New Highly Conductive Inorganic Electrolytes", see page 2682 - page 2686, especially abstract, page 2682
- Patent Abstracts of Japan, Vol. 11, No. 343, E555, abstract of JP 62-123651, publ. 1987-06-04 (HITACHI MAXELL LTD)

## Description

### Technical Field

This invention relates to a secondary or rechargeable lithium battery, which may also be used as a primary battery.

### Technical Background

At the present time there is a growing interest for lithium batteries, not only for primary, but also secondary batteries. The reasons for this interest are well known in the art, but the development has so far been retarded by different problems, primarily with the use of lithium as the anode material. Now different lithium alloys are utilized, one advantageous example being a lithium aluminium alloy. Also the choice of cathode and electrolyte has given rise to problems.

For a primary battery a known combination in a lithium/sulphur dioxide system comprises a Li(AI) anode, a cathode of carbon black in combination with a SO₂-LiAICl₄ complex, and a liquid electrolyte consisting of 6SO₂-LiAICl₄. A battery of this kind - with a special construction - has many advantages, among them a very high capacity. However, when utilized as a secondary battery a certain risk for thermal run-away has been demonstrated, which makes this combination unsuitable for other uses than as a primary battery.

### The Invention

By according to the invention changing the cathode from carbon black in combination with the SO_{Z}-LiAICl₄ complex to TiS₂ (or any other suitable metal sulphide) having a different function than the above- mentioned cathode the risk for thermal run-away during charge is obviated, while the capacity is still high and the rechargeability good. The system works at low voltage.

Accordingly an advantageous secondary (or primary) lithium battery is obtained by the combination of the following main constituents altogether forming a lithium/sulphur dioxide system
Li(AI) / SO₂ + LiAICl₄ / TiS₂:
   1) an anode of a Li(AI) alloy,
   2) a cathode of TiS₂ and
   3) a liquid electrolyte consisting of 6SO₂-LiAICl₄.

The lithium content in the anode is between 10 and 95 atom% and the balance is essentially aluminium.

### Brief Description of the Drawings

The invention will be described in further detail below reference being made to the accompanying drawings, in which Fig 1 illustrates a thread length with anode elements according to the invention thereon, Fig 2 shows an anode element to a larger scale, Fig 3 is a plan view of an embodiment of an anode according to the invention, and Fig 4 is a cross-sectional view of a battery.

### Detailed Description of Preferred Embodiments

Generally speaking, the invention is described in its application to a liquid electrolyte lithium battery and especially a battery based on the following lithium/sulphur dioxide system:
Li / SO₂ + LiAICl₄ / TiS₂

This system has the important advantages of providing high energy and power density.

The reversible chemical reaction in a battery of this type has the following overall scheme:
_{Li + T}i_{S2 r} LiTiS₂

The electrolyte SO₂ + LiAICl₄ does not participate in the reaction but serves to transport ions.

Due to safety considerations with pure lithium as negative electrode or anode the use of a host metal forming an alloy with the highly reactive lithium has been investigated. It has been found that the use of aluminium as host metal gives advantages, especially the absence of dendrite formation and a high melting point. Accordingly a lithium-aluminium alloy is used as anode in practical embodiments. Further aspects of this choice will be dealt with below, but already now it may be stated that an Li(AI) alloy containing between 10 and 95 atom% Li is preferred due to its unique rechargeability.

With Li(AI) as anode a practical cell voltage of 1.8 V is obtained.

The cathode or positive electrode is an electrically conducting TiS₂, which works as a host material for lithium cations. In order to get a high capability of rechargeable material, the stoichiometry of the cathode should be as close as possible to Ti=1, S=2. The electrolyte does not participate in the reactions and only functions as an ion conductor.

The electrolyte is 6SO₂-LiAICl₄, which requires a pressure of some 2 atmospheres to become liquid at room temperature. The quantity of SO₂ is stoichiometrically bigger than that of LiAICI₄, which is necessary both to ensure that the electrolyte is liquid down to -30°C and possesses an adequately low viscosity.

The separator in the battery shall effectively prevent electrical contact between anode and cathode but shall allow penetration of electrolyte and de-polarizer. It shall in this case be able to contain or store certain amounts of electrolyte. A commercially avail- able microporous polypropylene plastic film having up to 70 % porosity, being free of pinholes and possessing good physical strength, has been used.

A critical factor for the utilization of the anode electrode material in a battery is the active electrode surface. The cell power increases with increasing contact surface between electrode and electrolyte. In the present battery a large surface has been accomplished by the use of the so called "hollow fibre"- concept for the anode. This concept is revealed in WO-A-87/01516 and can be characterized in that the anode material is shaped as a cylinder or similar elongated body with optional cross-section and is encapsulated in an elastical, microporous separator material forming a hollow tube and that the anode elements are connected to an electrically conductive material (for example nickel) not taking part in the cell reaction. The cross-sectional dimension of the hollow tube or fibre is preferably less than 3 mm. Hollow fibres can also be used for the cathode.

Summarizing, the battery according to the invention works in the Li(Al)/S0₂ system. It has an anode of Li(AI) alloy in hollow fibre separator or isolated from the cathode by a separator. The discharge process for this battery system comprises oxidation of lithium and intercalation of lithium in the TiS₂ electrode. The electrolyte does not take part in the reaction in the voltage range concerned. At higher and lower voltages electrolyte reactions take place (C1₂ formation and S0₂ reduction, respectively) and have an irreversible impact on the rechargeability of the system.

As already mentioned an anode material constituting lithium in an alloy with aluminium has (together with the hollow fibre-concept) proven advantageous for a rechargable battery. The reasons can be summarized as follows:
- this alloy shows only small volume changes during charging and discharging,
- the cylindrical shape enables volume changes to occur in two dimensions, so that the anode structure is not disintegrated,
- the separator design gives a physical compression, leading to an increased integrity for the anode structure during charge and discharge, and
- the Li(AI) alloy has a melting point up to 600°C, which means that liquid and strongly aggressive lithium cannot be set free.

These factors are of special importance for the anode integrity, which is necessary to ensure that the anode material is rechargeable and safe.

The anode material can be manufactured in at least two different ways, namely either electrochemical loading of lithium into aluminium (electroforming) or pyrometallurgical fusion together of lithium and aluminium at a temperature of about 700°C or more.

Although the first-mentioned method has certain advantages, the second one is presently preferred.

The fusion together of lithium and aluminium at 700°C requires an inert atmosphere (argon), as both metals are aggressive relative to 0₂ and H₂0 and to a lesser extent N₂. The molten alloy is cooled off, whereafter it is ground in dry atmosphere (preferably less than 2 % humidity). The resulting powder can then be pressed (at a pressure of 6-10 ton/cm²) in a hydraulic press around a central nickel wire to a par- allelepipedical or cylindrical shape. An example of practical measurements are 1.4 x 1.8 x 50.0 mm. The anode is thereafter enclosed in a hollow fibre separator.

Further particulars about the procedure are given below.

As an alternative to pressing the powder into the desired shape a sintering process is feasible. Casting or extrusion directly on a central current collector is also possible.

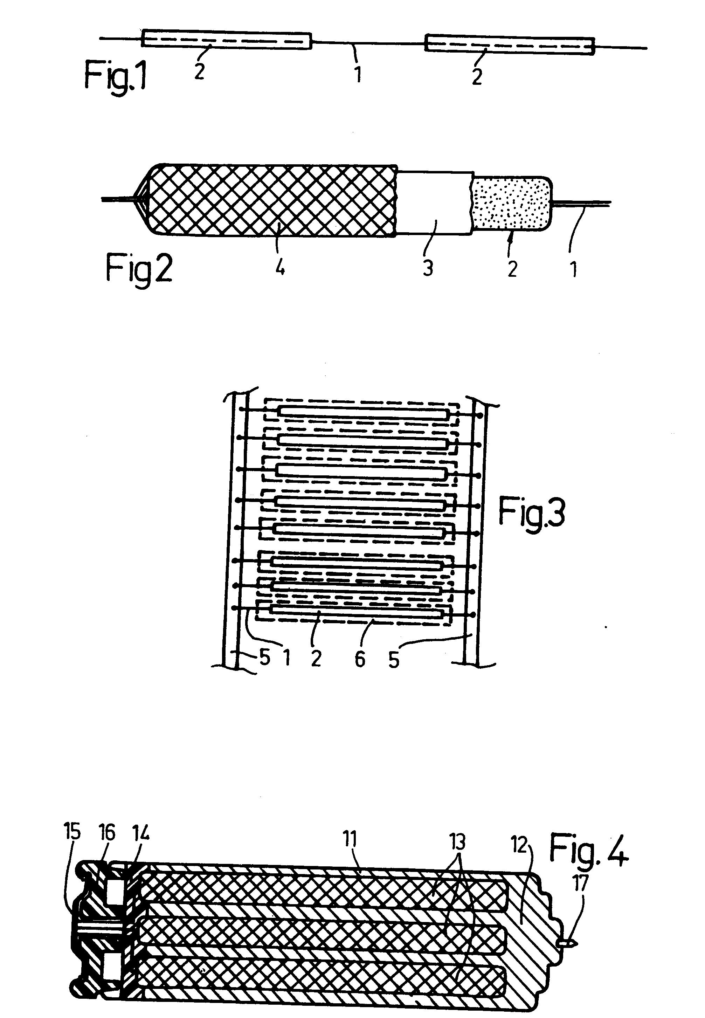

In an industrial process a conductive wire 1 (Fig 1) can be stepwise fed through a press or sinter equipment and provided with anode elements 2 at intervals suitable for the following creation of complete anodes. Referring to Fig 2, each anode element 2 may be provided with a separator 3 according to the "hollow fibre"-concept. This process is covered by WO-A-91/01046.

Due to the comparatively low physical strength of the separator material it may be advantageous, especially when the battery is to be of the secondary type, to cover each anode element enclosed in separator material with a reinforcing web or net 4, preferably but not necessarily of the same material. In a practical case a number of filaments are braided directly on each element.

After separation the anode elements 2 may be placed as cross-bars betwen two collector rails 5, as shown in Fig 3, and their conductive wires 1 are attached to the collector rails 5 by soldering or the like. If the anode elements 2 are not already provided with separators time has now come to do so by pressing and line welding. The hollow fibre separators are indicated in Fig 3 by reference numeral 6. Hereafterthe formed anode ladder can be cut into desired lengths for the intended purpose.

As a variation of this embodiment, a certain length of a thread 1 provided with anode elements 2 (according to Fig 2) can be laid in S-loops with the anode elements in parallel between the bends, whereupon two connector rails 5 are attached at the bends. Also, such a length of thread 1 provided with anode elements 2 can be wound around two connector rails 5 (placed at the desired distance from each other) and attached thereto so as to form the anode ladder of the type shown in Fig 3.

Alternatives to the processes described above are possible. For example it would be possible to stamp out a complete ladder with cross bars and collector rails from a nickel sheet and then to provide it with anode elements by pressing or sintering as described above. Furher, a comb-like structure for the anode is feasible. Also a grid of nickel or other conductive material could be provided with rod-like anode elements covered with separators for forming the hollow fibres.

A practical embodiment of a secondary battery according to the invention is shown in Fig 4. In a metal can or container 11 a shaped cathode 12 of for example TiS₂ is placed. A number of Li(AI) anodes 13, for example of the type depicted in Fig 2, are inserted in the cathode. The number of anodes may be seven: one central and six peripherically arranged. The threads or current connectors from the anodes 13 extend through a plastic spacer 14 to a metal lid or terminal 15, which is electrically parted from the container 11 by a plastic isolator 16. After mounting electrolyte may be introduced through a filling port 17 in the container 11; this port is thereafter permanently closed.

Other shapes and sizes of the final battery may of course be accomplished without difficulties.

In order to obtain the desired properties, for example with regard to mechanical stability and high density, for the cathode material TiS₂ is mixed with Te- flon® in proportions appr 85:15. It is then pressed onto a current collecting net or the like, for example of nickel foam. The finished cathodes are isolated from the anodes by a separator. A nickel wire makes the connection to the cell container.

The electrolyte described above can be prepared in that equimolar amounts of LiCI and AICI₃ are mixed in a pressure vessel, whereupon SO₂ is added.

The following three examples illustrate the advantages in a secondary battery of a lithium content of appr 30 atom% in a Li(AI) alloy with regard to cyclability, energy density and energy output but also of the general features in the manufacture.

### Example 1

An electrochemical cell (7 cm³) consisting of 2.7 g of 30 atom% Li(AI) alloy (surface area ca 65 cm²) anode covered with a microporous polypropylene separator, 8 g electrolyte (LiAICI₄, SO₂ 1:6) and 1.5 g Ketjen black (15 weight% Teflon) cathode was assembled in sandwich fashion in an SS battery container. Leads and collectors were all nickel. The cell was discharged at 500 mA; closed cell voltage 2.6 V, open cell voltage 2.8 V.

### Example 2

10 g of lithium (Lithco, 99%) and 90 g of aluminium (Merck, 99.9%) are placed in a stainless steel container and heated above the melting point 700°C for 15 min. The resulting liquid is cooled to room temperature, and the resulting eutectic solid (mixed alpha beta phase) is ground to 200 mesh. This homogene alloy containing appr. 30 atom% Li and 70 atom% AI is pressed into anodes of desired shape and used in

### example 1.

### Example 3

Aluminium (Merck, 99.9%) of the desired shape, covered with a polypropylene separator (Celanese, Hoechst), and lithium (Lithco, 99%) is dipped in an anhydrous electrolyte (i.e. 1 M LiCF₃S0₃ in THF, tetrahydrofuran), and external electrical contact between Li and AI is established. When the desired lithium amount has been charged into the aluminium host, the anode is washed in anhydrous THF and is then ready for use in any of the examples 1-4.

The results so far obtained with laboratory cells based on the teachings above (hollow fibre concept, Li(Al)/S0₂ system and so forth) are promising. Thus the following data are typical of the achievements: energy density 275 Wh/I, power density 160 W/l, discharge current 7.5 mA/cm². The laboratory cells used have the dimension 50 x 16 x 9 mm.

In a primary battery other aspects of the lithium contents of the Li(AI) anode are more important than those referred to above. Accordingly, in such a battery the lithium contents may be as high as 95 atom%.

### Example 4

An electrochemical cell (1 cm³) consisting of 38 mg TiS₂ (10 weight% Teflon @) cathode covered with a microporous polypropylene separator, 2.5 g electrolyte (LiAICI₄, SO₂ 1:6) and 0.008. g lithium anode was assembled in a battery container. Leads and connectors were nickel. The cell delivered 25 cycles at 2.5 mAh (30 % depth of discharge) at the discharge rate 0.6 mA; closed cell voltage was 2.1 V, open cell voltage 3.06 V.

The lithium turnover is defined as the number of times the initial lithium has been used during the cycling test. The lithium turnover was 3.6.

### Example 5

A comparable cell, consisting of 19 mg TiS₂ cathode, 2.5 g electrolyte and 0.05 g of lithiumaluminium (20 weight% of lithium) replacing the metallic lithium, delivered 20 cycles of 1.5 mAh (30 % depth of discharge) at the discharge rate 0.5 mA; closed cell voltage 1.75 V, open cell voltage 2.6 V. The lithium turnover was 1.5.

### Example 6

A comparable cell consisting of 18 mg TiS₂ cathode, 0.3 g electrolyte instead of 2.5 g and 0.03 g lithium-aluminium as anode delivered 10 cycles of 2.2 mAh (45 % depth of discharge) at the discharge rate 0.9 mA. The lithium turnover was 1.

The behaviour of the system at high voltage is illustrated in the following examples:

### Example 7

A comparable cell consisting of 22 mg TiS₂, 0.7 g electrolyte and 70 mg lithium-aluminium anode delivered 1 cycle of 16.2 mAh at the charge rage 0.5 mA; voltage limit 4.5 V versus LiAl. No venting of the cell took place. During the next discharge the TiS₂ capacity was considerably reduced.

### Example 8

A comparable cell to example 6 delivered 1 cycle at 19 mAh at the charge rage 1 mAh, voltage limit 4.5 V. No venting of the cell took place. Cathode material cyclability was reduced considerably.

### Example 9

A comparable cell consisting of 18 mg TiS₂, 1 g electrolyte and 120 mg lithium-aluminium as anode was polarised at 4.5 V for 24 hours. The cell did not vent.

### Example 10

An electrolyte containing SOCl₂ instead of SO₂ was investigated. The composition was (SOCl₂)₆ LiAlCl₄.

### Example 11

A cell with 0.3 g SOCl₂ electrolyte replacing the SO₂ electrolyte delivered 1 cycle at 40 % depth of discharge. The system is not rechargeable. The ohmic resistance increased considerably.

### Example 12

The temperature influence (-38°C, -15°C) on the cyclability of the system is described in the following example:
A cell with 28 mg TiS₂ electrolyte and 51 mg lithium-aluminium as anode delivered at -38°C 1 cycle of 0.35 mAh (5 % depth of dischargbe), at -15°C 1 cycle of 1.75 mAh (26 % depth of discharge), and at room temperature 1 cycle of 2.8 mAh (42 % depth of discharge).

### Conclusion

The Li-SO₂ system based on TiS₂ as cathode was safe with respect to cyclability. The discharge of the system takes place at low voltage (2.1 V vs Li, 1.75 V vs LiAl) and prevents degradation and corrosion risks experienced at high voltage in a carbon based system.

The safety of the system at high voltage (4.5 V vs LiAl) was demonstrated.

The capacity decrease of the cell was attributed to a non-optimised mechanical property of the cathode. The lithium based cell and the lithium-aluminium based cell behaved identically. An optimised cell consisting of TiS₂, electrolyte (SO₂, LiAICl₄) placed in the separator and a lithium-aluminium anode (20 % weight lithium and 5 times the TiS₂ stoichiometery) will deliver a theoretical energy density of 273 Wh/I and a power density of 1150 W/I. The cycling at 50 % of the theoretical capacity will give an energy density of 136 Wh/I.

The same cell based on a metallic lithium anode will deliver a theoretical energy density of 425 Wh/I. At 50 % depth of discharge the cell will deliver 210 Wh/I.

## Claims

1. A secondary or primary lithium battery, characterized by the combination of the following main constituents altogether forming a lithium/sulphur dioxide system
Li(AI) / SO₂ + LiAIC1₄ / TiS₂:
1) an anode of a Li(AI) alloy,
2) a cathode of TiS₂, and
3) a liquid electrolyte consisting of 6SO₂-Li-AICI₄.

2. A battery according to claim 1, characterized in that the lithium content in the anode is between 10 and 95 atom% and the balance is essentially aluminium.

## Patentansprüche

1. Sekundär- oder Primär-Lithiumbatterie,
gekennzeichnet durch
die Kombination der folgenden Hauptbestandteile, die insgesamt ein Lithium/Schwefeldioxid-System
Li(AI) / SO₂ + LiAICl₄ / TiS₂ bilden:
1) eine Anode aus einer Li(AI)-Legierung,
2) eine Kathode aus TiS₂, und
3) ein flüssiges Elektrolyt, bestehend aus 6SO₂-LiAICl₄.

2. Batterie nach Anspruch 1,
dadurch gekennzeichnet,
daß der Lithiumanteil in der Anode zwischen 10 und 95 Atom% beträgt, wobei der Rest im wesentlichen Aluminium ist.

## Revendications

1. Batterie primaire ou secondaire au lithium, caractérisée par la combinaison des principaux constituants ci-après, formant globalement un système lithium/dioxyde de soufre Li(Al)/S0₂+ Li AICl₄/TiS₂ :
1) une anode d'un alliage Li(AI),
2) une cathode de TiS₂, et
3) un électrolyte liquide constitué de 6 SO₂-LiAlC₄

2. Batterie selon la revendication 1, caractérisée en ce que la teneur en lithium dans l'anode est comprise entre 10 et 95 atomes%, le reste étant essentiellement de l'aluminium.
